# EUROPÄISCHE PATENTSCHRIFT

(11) **EP 2 933 090 B1**
(45) Veröffentlichungstag und Bekanntmachung des Hinweises auf die Patenterteilung: **08.11.2017**
(21) Anmeldenummer: 15163382.3
(22) Anmeldetag: 13.04.2015
(51) Int. Cl.: B29C 63/00, B32B 37/12, B32B 37/00

(54) **KASCHIERVERFAHREN MIT RASTERFÖRMIGEM KLEBSTOFFAUFTRAG**
LAMINATING METHOD WITH GRID-SHAPED ADHESIVE APPLICATION
PROCÉDÉ DE LAMINAGE AVEC APPLICATION D'ADHÉSIF EN FORME DE GRILLE

(30) Priorität: 14.04.2014 EP 14164625
(43) Veröffentlichungstag der Anmeldung: 21.10.2015
(73) Patentinhaber: Jowat SE, 32758 Detmold (DE)
(72) Erfinder: Hohberg, Thomas, Dr., 33699 Bielefeld (DE)
(74) Vertreter: dompatent von Kreisler Selting Werner - Partnerschaft von Patent- und Rechtsanwälten mbB

(56) Entgegenhaltungen:
- EP-A1- 2 551 136
- WO-A1-2012/132381
- US-A- 4 548 846
- US-A1- 2010 227 118
- US-A1- 2012 121 849
- US-A1- 2012 312 470

## Beschreibung

### Technisches Gebiet

Die vorliegende Erfindung betrifft ein Verfahren zum Kaschieren von Bauteilen mit Folien, wobei ein Klebstoff rasterförmig so auf die Oberfläche der Kaschierfolie und/oder des Bauteils aufgetragen wird, dass nach dem Zusammenfügen der Folie und des Bauteils der Klebstoff zwischen der Folie und dem Bauteil angeordnet ist und die Bereiche zwischen den Klebstoffauftragungen ein Kanalsystem bilden, welches den gleichmäßigen Abtransport (Entfernen) der zwischen dem Bauteil und der Folie befindlichen Luft durch Abziehen durch Anlegen eines Unterdrucks gewährleistet.

Offenbart ist ferner ein kaschiertes Formteil, welches durch das oben genannte Verfahren erhältlich ist. Durch die Verwendung eines zwischen einem Bauteil und einer Kaschierfolie angeordneten Klebstoffrasters werden Lufteinschlüsse bei der Kaschierung des Bauteils mit der Kaschierfolie reduziert oder ganz vermieden.

### Hintergrund der Erfindung/Stand der Technik

Die Kaschierung von Bauteilen mittels Anlegen eines Unterdruck bzw. Vakuums wie z.B. Vakuumkaschieren oder Varianten wie das In-Mould-Graining (IMG)-Verfahren und/oder mittels Pressdrucks sind in der Industrie weit verbreitet.

US-A-2012/121849 offenbart Verfahren zur Herstellung eines kaschierten Formteils aus einem Bauteil und einer Kaschierfolie, wobei das Verbinden der Kaschierfolie mit dem Bauteil durch Herauspressen der zwischen Bauteil und Folie befindlichen Luft über die Kanäle durch Anlegen eines Pressdrucks erfolgt. Der Klebstoff zwischen dem Bauteil und der Kaschierfolie kann unregelmäßig gerastert sein.

WO 03/103853 offenbart ein Verfahren zum Verbinden einer mit einem druckempfindlichen Haftkleber (pressure sensitive adhesive) beschichteten Polymerfolie mit einem Substrat, welches an der Oberfläche Unregelmäßigkeiten, Erhöhungen und Vertiefungen aufweist, durch Anlegen eines Unterdrucks. Der Klebstoffauftrag auf der Polymerfolie kann ein Muster aufweisen, z.B. punkt- oder linienförmig sein, um den Abzug der zwischen Substrat und Polymerfolie befindlichen Luft zu gewährleisten.

Bei vakuumunterstützten Kaschierverfahren wird im Allgemeinen ein luftundurchlässiges bzw. begrenzt luftundurchlässiges Material (z.B. eine Dekorfolie) auf ein festes Bauteil kaschiert. Der verwendete Klebstoff kann dabei als Vorbeschichtung auf der Folie oder dem Bauteil aufgebracht sein.

Die Folie kann in diesem Prozess erwärmt und dann mittels Anlegen eines Unterdrucks auf das Bauteil aufgebracht werden. Die für die Folienverformung notwendige Wärmeenergie kann dabei auch zur Aktivierung des Klebstoffes genutzt werden. Eine entscheidende Bedingung für den Prozess ist die Luftdurchlässigkeit (Vakuumfähigkeit) des zu kaschierenden Substrates (Bauteils) in Kombination mit einer luftundurchlässigen Folie. Letzteres kann beispielsweise auch durch eine zusätzliche Membrane erreicht werden.

Während die Vakuumfähigkeit bei porösen Stoffen wie zum Beispiel Holzwerkstoffen oder offenporigen Verbundwerkstoffen in der Regel gegeben ist, sind bei luftundurchlässigen Bauteilmaterialien, wie sie typischerweise im Spritzgussverfahren hergestellt werden, oder begrenzt luftdurchlässigen Bauteilmaterialien, wie zum Beispiel bei bestimmten Faserverbundstoffen, besondere Vorkehrungen zu treffen. Hierzu zählen üblicherweise das Einbringen von Vakuumlöchern und das Aufbringen einer Kaschiernarbung auf das Bauteil, welche ein Absaugen der zwischen Folie und Bauteil befindlichen Luft ermöglicht. Durch die Kaschiernarbung entstehen Narbgräben im Bauteil über welchen die zwischen Bauteil und Folie befindliche Luft abgezogen werden kann.

Die Vakuumlöcher ermöglichen das Entweichen der Luft zwischen Folie und Bauteil durch Anlegen eines Unterdrucks bzw. Vakuums. Dies ist jedoch oft nicht ausreichend um klein- bis mittelgroße Lufteinschlüsse zu vermeiden. Diese können z.B. durch die Geometrie der Bauteile, aber auch durch den Ablegeprozess der Folie und die begrenzte Kapazität der Vakuumlöcher entstehen. Daher wird im Stand der Technik üblicherweise zusätzlich eine Kaschiernarbung auf das Bauteil aufgebracht, die auch nach dem "Erstkontakt" der Folie mit dem Bauteil einen weiteren Lufttransport durch die Gräben der Narbung zu den Löchern ermöglicht. Das Aufbringen dieser Kaschiernarbung auf das Bauteil ist jedoch technisch aufwändig und kostenintensiv, zumal eine ausreichende Narbung typischerweise 0,2 bis 0,3 mm Tiefe benötigt, was zu einem entsprechend höheren Materialeinsatz führt und auch das Gesamtgewicht des Bauteils erhöht. Dies kann bis zu 10 Gew.-% des Bauteilgewichtes betreffen.

Im Automobilbereich, insbesondere für Bauteile der Inneneinrichtung von Fahrzeugen, kommen in der Praxis typischerweise zwei verschiedene Prozesse für die Folienkaschierung zum Einsatz.

In einem ersten Verfahren erfolgt der Klebstoffauftrag durch Sprühen auf das Bauteil. Hierbei muss ein lackartiger Klebstoffauftrag vermieden werden, da dieser zu einem Verstopfen der Vakuumlöcher durch den Klebstoff (z.B. bei Verwendung eines Dispersions- oder Lösemittelklebstoffs) führen kann.

In einem alternativen Verfahren erfolgt der Klebstoffauftrag (z.B. eines Schmelzklebstoffs) auf die Folie. Hierbei wird der Schmelzklebstoff mit der Folie auf die notwendige folientypische Verformtemperatur (je nach Folie 120 - 210 °C) erwärmt und damit aktiviert.

Bei letztgenanntem Prozess ist der Klebstoff (in der Regel ein reaktiver oder thermoplastischer Schmelzklebstoff) viskos-flüssig. Das gilt auch noch beim Vakuumfügeprozess. Der zähflüssige Klebstoff kann dabei aufgrund seiner Fließfähigkeit sehr leicht die Vakuumlöcher oder die Narbgräben verschließen. Dies verhindert den gleichmäßigen Abzug der Luft und kann somit die Bildung von Lufteinschlüssen begünstigen. Dies führt im fertigen kaschierten Formteil zu sichtbaren aber auch unsichtbaren Fehlstellen.

Tatsächlich ist dem Fachmann bekannt, dass diese Art von Fehlstellen, die durch Lufteinschlüsse entstehen, bei der Verwendung von Schmelzklebstoffen häufig eintritt und die Ansprüche an die Narbqualität und Tiefe sowie Anzahl der Löcher höher sind als beim erstgenannten Prozess, in welchem der Klebstoff auf das Bauteil aufgesprüht wird.

Aufgabe der vorliegenden Erfindung war es somit, ein Kaschierverfahren für Bauteile bereitzustellen, bei welchem die Bildung von Lufteinschlüssen bzw. Fehlstellen weitestgehend und vorzugsweise ganz vermieden wird.

Darüber hinaus sollte das erfindungsgemäße Verfahren auch für Bauteile ohne aufwändige Gravuren/Narbungen geeignet sein, um somit unter anderem ein kostengünstigeres Verfahren (z.B. durch Einsatz von Spritzwerkzeugen ohne Narbung, geringerer Verschleiß des Spritzwerkzeuges), geringere Bauteilgewichte, einfachere Bauteilkorrekturen (keine Beachtung der Narbung) und den Einsatz von nicht oder nur schlecht gravierbaren Materialen wie beispielsweise Faserverbundstoffen zu ermöglichen. Das Verfahren sollte weiterhin eine Verringerung der Anzahl der Vakuumlöcher im Bauteil ermöglichen, sowie eine unvollständige Vernetzung bei Verwendung von reaktiven Klebstoffen vermeiden, die dadurch entsteht, dass der feuchtigkeitsreaktive Klebstoff unzureichenden Kontakt zu Luft und damit zu Feuchtigkeit hat.

### Kurzbeschreibung der Erfindung

Es wurde überraschend gefunden, dass die Nachteile des Standes der Technik durch die Erfindung gelöst werden.

Die Erfindung betrifft dabei ein **Verfahren zur Herstellung eines kaschierten Formteils aus einem Bauteil und einer Kaschierfolie umfassend**
- **das Auftragen eines Klebstoffs auf die Oberfläche der Kaschierfolie und/oder des Bauteils,**
- **das Zusammenfügen des Bauteils und der Kaschierfolie so, dass die Schicht des rasterförmig aufgetragenen Klebstoffs zwischen der Kaschierfolie und dem Bauteil angeordnet ist, und**
- **das Verbinden der Kaschierfolie mit dem Bauteil durch Abziehen der zwischen Bauteil und Folie befindlichen Luft über die Kanäle durch Anlegen eines Unterdrucks, wobei das Verfahren dadurch gekennzeichnet ist, dass**
- **das Auftragen eines Klebstoffs auf die Oberfläche der Kaschierfolie und/oder des Bauteils rasterförmig erfolgt und durch das rasterförmige Auftragen des Klebstoffs auf der Oberfläche Kanäle ausgebildet werden, und**
- **der Klebstoff ein Schmelzklebstoff ist, der bei einer Verarbeitungstemperatur von 90 °C bis 200 °C eine Brookfield-Viskosität von 50 bis 1 000 000 mPa·s aufweist.**

**Mit dem erfindungsgemäßen Verfahren gemäß einem oder mehreren der vorangehenden Punkte können kaschierte Formteile, insbesondere Fahrzeuginnenverkleidungen oder Teile einer Fahrzeuginnenverkleidung, hergestellt werden.**

Gemäß der Erfindung wird ein zwischen einem Bauteil und einer Kaschierfolie angeordnetes Klebstoffraster zur Reduzierung oder Vermeidung von Lufteinschlüssen bei der Kaschierung des Bauteils mit der Kaschierfolie verwendet.

Die Kaschierung kann eine Vakuumkaschierung oder ein In-Mould-Grain (IMG)-Verfahren sein oder eine Kombination eines dieser Verfahren mit einer Presskaschierung.

Die kaschierten Formteile, die nach dem erfindungsgemäßen Verfahren hergestellt werden können, können als Fahrzeuginnenverkleidung oder als Teil einer Fahrzeuginnenverkleidung Anwendung finden.

### Kurzbeschreibung der Abbildungen/Figuren

Die Abbildung 1 zeigt die nach dem Erhitzen und Abkühlen noch vorhandene Tropfenstruktur der Klebstoffauftragung.
Die Abbildung 2 zeigt ein Beispiel der Klebstoffstruktur nach dem Ablösen der Folie vom Bauteil.

### Detaillierte Beschreibung der Erfindung

Die vorliegende Erfindung betrifft das oben beschriebene Verfahren zur Herstellung eines kaschierten Formteils aus einem Bauteil und einer Kaschierfolie sowie ein kaschiertes Formteil, insbesondere eine Fahrzeuginnenverkleidung oder ein Teil einer Fahrzeuginnenverkleidung, welches nach dem erfindungsgemäßen Verfahren erhältlich ist.

Unter rasterförmigem Klebstoffauftrag (Auftrag einer Gravur entsprechend dem Auftrag des Klebstoffs in einem bestimmten Muster in einer dreidimensionalen Struktur) gemäß der vorliegenden Erfindung wird in der vorliegenden Offenbarung ein strukturierter Klebstoffauftrag auf einer Oberfläche verstanden, der zwischen den einzelnen Klebstoffauftragungen Kanäle bzw. ein Kanalsystem aufweist, welches vorzugsweise zusammenhängend ist. Der Klebstoff wird vorzugsweise in Form von Punkten und/oder Streifen in vorgegebenen Abständen (d.h. in einem bestimmten Raster) aufgetragen. Die dabei ausgebildeten Kanäle (bzw. das Kanalsystem) zwischen den Klebstoffauftragungen ermöglichen nach dem Zusammenfügen der Kaschierfolie und dem Bauteil ein optimiertes Absaugen, also Entfernen, der zwischen Folie und Bauteil befindlichen Luft. Das Absaugen der Luft erfolgt typischerweise über den Rand des Bauteils und/oder dadurch, dass über im Bauteil angeordnete Vakuumlöcher ein Unterdruck/Vakuum angelegt wird. Insbesondere ermöglichen die durchgehenden Kanäle (Kanalsystem) ein gleichmäßiges Entweichen der Luft durch Absaugen über die gesamte Oberfläche des mit Folie bedeckten Bauteils, wobei dies weitgehend unabhängig von der Geometrie des Bauteils (beispielsweise eventuell vorhandene Radien oder periphäre Kanten) geschieht. Auch bei der Folienkaschierung unter zusätzlicher Anwendung von Pressdruck, also dem Absaugen von Luft durch Anlegen eines Unterdrucks in Kombination mit einem Herauspressen der zwischen dem Bauteil und der Folie befindlichen Luft durch Anlegen eines Pressdrucks, ist die rasterförmige, das Kanalsystem bildende Klebstoffauftragung gleichermaßen von Vorteil, da hier die zwischen dem Bauteil und der Folie befindliche Luft über die gesamte Oberfläche des Bauteils gleichmäßig entfernt werden kann.

Überraschendweise wurde ferner gefunden, dass die rasterförmige, Kanäle ausbildende Struktur des Klebstoffauftrags während des Kaschierverfahrens ausreichend erhalten bleibt und kein Zerfließen des Klebstoffes stattfindet. Die Art des verwendeten Klebstoffs unterliegt dabei keiner besonderen Einschränkung, so dass hier grundsätzlich alle für die Folienkaschierung üblichen Kaschierklebstoffe eingesetzt werden können. Es wird insoweit auf den diesbezüglichen bekannten Stand der Technik verwiesen.

Weiterhin ermöglicht der rasterförmige Klebstoffauftrag, dass bei der Verwendung feuchtigkeitsreaktiver Klebstoffe über die Kanäle ausreichend Kontakt zur umgebenden Luft und damit zur Luftfeuchtigkeit besteht. Ein unvollständiges Vernetzen des Klebstoffes und somit die Bildung von Fehlstellen ohne Verklebung wird dadurch vermieden.

Der rasterförmige Auftrag von Klebstoffen, insbesondere von Schmelzklebstoffen, ist dem Fachmann an sich bekannt. Typischerweise wird der rasterförmige Auftrag jedoch nur aus Gründen der Verringerung der Klebstoffmenge, dem besseren Verankern des Klebstoffes in offenen Substraten, wie z.B. Schäumen, dem Erstellen atmungsaktiver Laminate, z.B. bei der Kaschierung von atmungsaktiven Membranen bei denen ein geschlossener Klebstofffilm unerwünscht ist, eingesetzt. Die gezielte Verwendung in Kaschierverfahren unter Verwendung von Unterdruck oder gleichzeitiger Anwendung von Unterdruck und Pressdruck und insbesondere zur Reduzierung und Vermeidung von Lufteinschlüssen, ist jedoch nicht bekannt.

Bei der gezielten Verwendung einer bestimmten Gravur, bei der der Klebstoff rasterförmig aufgetragen wird, bilden sich Bereiche, insbesondere linienförmige Bereiche ohne (oder mit deutlich geringerem) Klebstoffauftrag aus (sogenannte Kanäle), welche im Kaschierprozess hinreichend lange bestehen bleiben, so dass ein vollständiges und großflächiges, d.h. gleichmäßiges Entfernen der zwischen der Folie und dem Substrat befindlichen Luft durch Absaugen oder gleichzeitigem Absaugen und Herauspressen der Luft möglich wird. Vorzugsweise bleiben die Kanäle bis zum Ende des Kaschierprozesses und somit auch insbesondere im fertig kaschierten Formteil erhalten.

Die Geometrie der Gravur bzw. des Rasters unterliegt dabei prinzipiell keinen Beschränkungen, soweit sichergestellt ist, dass ausreichend Kanäle gebildet werden, die ein Entfernen der Luft durch Absaugen oder gleichzeitigem Absaugen und Herauspressen bzw. bei feuchtigkeitsreaktiven Klebstoffen ausreichend Luftzugang (und damit Feuchtigkeitszutritt zum Klebstoff) ermöglichen.

Vorzugsweise wird der Klebstoff punktförmig oder streifenförmig aufgetragen, besonders bevorzugt in Form von pyramidenstumpfförmigen, mehreckigen (zum Beispiel drei-, vier-, fünf-, sechs-, sieben-, acht-, neun- oder zehneckigen), rautenförmigen, rechteckigen, ovalen, L-förmigen, runden oder unregelmäßig geformten Klebstoffauftragungen, insbesondere in Form von pyramidenstumpfförmigen Klebstoffauftragungen.

Weiterhin können auch Gravuren eingesetzt werden, welche dem Fachmann von den Standard-Narbgravuren der Bauteile her hinreichend bekannt sind.

Die Klebstoffauftragungen (insbesondere die pyramidenstumpfförmigen Klebstoffauftragungen) werden vorzugsweise in einem Abstand (gemessen an der Substratoberfläche) von 0,1 mm oder mehr bis 10,0 mm oder weniger, vorzugsweise von 0,3 mm oder mehr bis 5,0 mm oder weniger, besonders bevorzugt von 0,5 mm oder mehr bis 4,0 mm oder weniger, ganz besonders bevorzugt von 1,0 mm oder mehr bis 3,5 mm oder weniger, insbesondere von 1,5 mm oder mehr bis 2,5 mm oder weniger aufgetragen.

Die Gravurtiefe, d.h. die Dicke (Höhe gemessen ab der jeweiligen Substratoberfläche) der Klebstoffauftragungen, liegt bevorzugt im Bereich von 0,1 mm oder mehr bis 1,5 mm oder weniger, besonders bevorzugt von 0,2 mm oder mehr bis 1,0 mm oder weniger, ganz besonders bevorzugt von 0,5 mm oder mehr bis 0,8 mm oder weniger.

Die Klebstoffpunkte werden dabei bevorzugt in unregelmäßiger Anordnung oder in unterschiedlichen Bereichen unterschiedlicher, vorzugsweise unregelmäßiger Anordnung aufgetragen, d.h. ohne Ausbildung von längeren geradlinigen Kanälen. Die Ausbildung einer Sekundärstruktur (d.h. einer Struktur, die erst durch eine bestimmte regelmäßige Anordnung der Klebstoffauftragungen erkennbar wird) wird somit vermieden, was dazu führt, dass der Betrachter des fertigen, kaschierten Bauteils den Anschein einer besonders glatten Oberfläche erhält. Selbstverständlich sind auch regelmäßige Klebstoffauftragungen in Form von geometrischen Mustern, deren Kombinationen oder Kombinationen davon mit unregelmäßigen Klebstoffauftragungen möglich. Auch kann die Klebstoffauftragung an das Formteil, dessen Gestalt und/oder dessen Oberfläche angepasst sein.

Durch die durch das Klebstoffraster gestalteten/ausgebildeten Kanäle können insbesondere auch Bauteile ohne jegliche Narbung (oder solche mit flacher, typischerweise ungeeigneter Narbung, oder glatter Oberfläche) sowie Bauteile mit wenigen (Vakuum-) Löchern kaschiert werden. Hierdurch entsteht eine erheblich geringere Anzahl von Fehlstellen. Im bevorzugten Idealfall weist das Endprodukt keine erkennbaren Fehlstellen auf.

Wird der Klebstoff aufgeschmolzen (z.B. bei Verwendung von Schmelzklebstoffen), verläuft dieser nicht flächig, sondern es bilden sich beim Vorliegen einer geeigneten Gravur einzelne Tropfen, wobei die Kanäle zwischen den Tropfen erhalten bleiben. Diese Kanäle ermöglichen dann einen gleichmäßigen Lufttransport im Bereich zwischen dem Bauteil und der Kaschierfolie und damit die gewünschte horizontale Vakuumgängigkeit (horizontaler Lufttransport, d.h. Entfernung der Luft) innerhalb des Klebstoffrasters.

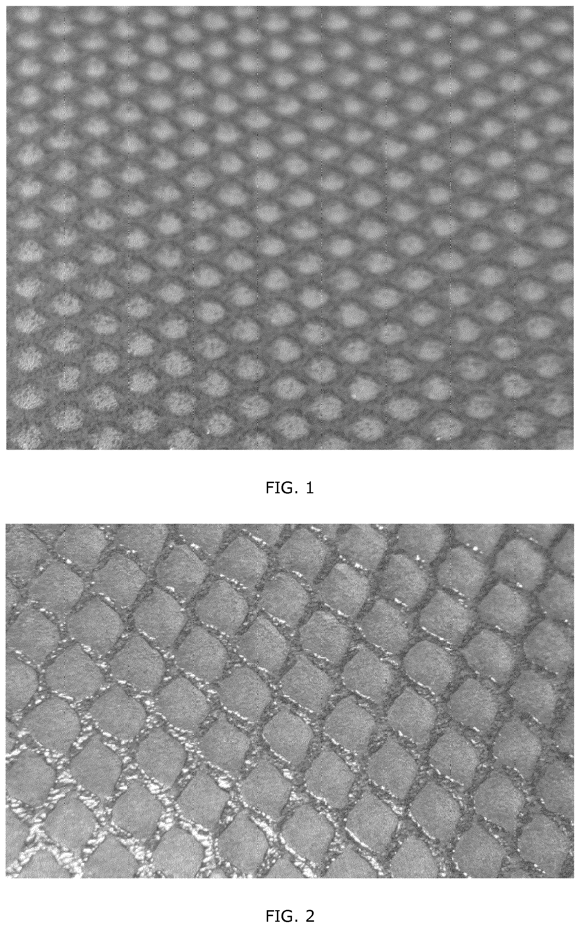

Die Abbildung 1 zeigt die nach dem Erhitzen und Abkühlen noch vorhandene Tropfenstruktur des Klebstoffauftrages zwischen der Folie und dem Bauteil.

In einer bevorzugten Ausführungsform ist der Klebstoff ausgewählt aus der Gruppe bestehend aus reaktiven oder nicht-reaktiven thermoplastischen Schmelzklebstoffen. Besonders bevorzugt sind Schmelzklebstoffe auf Basis von Ethylenvinylacetaten, Polyacrylaten, Copolyamiden, Copolyestern, Copolyethern, Polyolefinen, Polyurethanen oder entsprechenden Co- und/oder Terpolymeren.

Im Allgemeinen wird das erfindungsgemäße Verfahren in der Form durchgeführt, dass das Zusammenfügen von Kaschierfolie und Bauteil nach Beaufschlagung von Kaschierfolie und/oder des Bauteils mit dem Klebstoff durch Anlegen eines Unterdrucks (bzw. eines Vakuums) oder mittels gleichzeitigem Anlegen eines Unterdrucks und Pressdruck erfolgt. Die Anwendung von Druck geschieht beispielsweise durch Pressen der Folie auf das Bauteil oder Einpressen des Bauteils in die Folie, wobei die Folie in einer harten oder elastischen Aufnahme liegt, deren Form an das Bauteil angepasst ist.

Der Klebstoffauftrag erfolgt bevorzugt auf einer Oberfläche der Kaschierfolie, die im nachfolgenden Schritt dem zu kaschierenden Substrat zugewandt sein wird. Die mit Klebstoff rasterförmig beschichtete Kaschierfolie kann sofort auf das Bauteil aufgelegt und anschließend aufkaschiert werden oder, alternativ, gelagert und später zur Kaschierung verwendet werden. Im letzteren Fall ist die mit Klebstoff vorbeschichtete Folie dann vorzugsweise lagerstabil. Dies bedeutet auch, das sie als Rollenware bei Lagerung und Transport nicht verblockt und die Eigenschaften der Gravur bei Lagerung und Transport erhalten bleiben.

Die Verbindung mittels Vakuum erfolgt üblicherweise durch Anlegen eines Vakuums über den Rand des Bauteils oder über im Bauteil angeordnete Öffnungen, über welche ein Unterdruck angelegt werden kann (sogenannte Vakuumlöcher). Die Anzahl der Vakuumlöcher ist dabei der Größe und Geometrie des jeweiligen Bauteils sowie der verwendeten Klebstoffgravur/Klebstoffauftragung anzupassen. Vorzugsweise ist im Bauteil wenigstens ein Vakuumloch angeordnet. In weiteren erfindungsgemäßen Ausgestaltungen sind zwei, drei, vier oder noch mehr Öffnungen im Bauteil (Substrat oder Basisteil) angeordnet.

Bevorzugt erfolgt das Verbinden von Kaschierfolie und Bauteil unter Erwärmen, insbesondere oberhalb des Schmelz- oder Erweichungsbereiches des Klebstoffs.

Gemäß einer besonders bevorzugten Ausführungsform wird dabei die Kaschierfolie zunächst mit einem geeigneten Schmelzklebstoff rasterförmig beaufschlagt und anschließend mit dem zu kaschierenden Bauteil zusammengefügt. Dabei wird der Schmelzklebstoff üblicherweise vor und/oder während des Zusammenfügens von Kaschierfolie und Bauteil oberhalb seiner Schmelz- bzw. Erweichungstemperatur erhitzt, so dass eine sichere Klebeverbindung zwischen Kaschierfolie einerseits und Bauteil andererseits gewährleistet ist.

Zur Gewährleistung eines sicheren Verbunds zwischen der Kaschierfolie einerseits und dem Bauteil andererseits bei gleichzeitig guten Verarbeitungseigenschaften, wie optischen Eigenschaften etc., wird der Klebstoff bevorzugt in einer Menge von 10 g/m² oder mehr bis 200 g/m² oder weniger, vorzugsweise von 50 g/m² oder mehr bis 100 g/m² oder weniger, eingesetzt bzw. aufgetragen.

Der Klebstoff bedeckt nach dem Auftrag vorzugsweise von 40 % oder mehr bis 99 % oder weniger der mit dem Klebstoffraster versehenen Gesamtfläche der Folie und/oder des Bauteils, vorzugsweise der Folie, besonders bevorzugt von 60 % oder mehr bis 90 % oder weniger, ganz besonders bevorzugt von 70 % oder mehr bis 85 % oder weniger.

Der Auftrag des Klebstoffs kann unter Erwärmen, üblicherweise unter Aufschmelzen, bei Temperaturen im Bereich von 40 °C oder mehr bis 220 °C oder weniger, insbesondere von 120 °C oder mehr bis 190 °C oder weniger erfolgen.

In einer bevorzugten Ausgestaltung des erfindungsgemäßen Verfahrens erfolgt dieses unter Erhitzen der mit dem Klebstoff beschichteten Kaschierfolie vor und/oder während des Verbindens mit dem Bauteil. Alternativ kann auch das Bauteil erhitzt werden.

Als Klebstoff wird bevorzugt ein lösungsmittelfreier Schmelzklebstoff eingesetzt. Hierbei handelt es sich insbesondere um bei Raumtemperatur (21 °C +/-1 °C) feste, wasser- und lösungsmittelfreie Klebstoffe, welche auf die zu verklebenden Materialien aus der Schmelze aufgetragen werden und nach dem Zusammenfügen beim Abkühlen unter Verfestigung physikalisch und/oder chemisch abbinden.

Geeignete Schmelzklebstoffe können, je nach Anforderungen, insbesondere Schmelzklebstoffe in thermoplastischer oder reaktiver Qualität sein.

Die eingesetzten Schmelzklebstoffe werden insbesondere in Abhängigkeit von den zu verklebenden Materialien und den diesbezüglichen jeweiligen Anforderungen, beispielsweise einer geforderten Temperatur- bzw. Hitzebeständigkeit der Verklebung etc., ausgewählt.

Als thermoplastische Schmelzklebstoffe können insbesondere solche auf Basis von Ethylenvinylacetaten (EVA), Polyolefinen (z. B. amorphen Poly-alpha-olefinen oder Metallocen-katalytisch hergestellten Polyolefinen), Copolyamiden, Copolyestern und/oder thermoplastischen Polyurethanen und/oder entsprechenden Co- und/oder Terpolymeren eingesetzt werden. Besonders bevorzugt sind dabei Metallocen-katalytisch hergestellte Polyolefine, da diese eine erhöhte Tackfreiheit besitzen.

Als reaktive, beispielsweise feuchtigkeitsvernetzende Schmelzklebstoffe kommen insbesondere solche auf Basis von silangepfropften amorphen Poly-alpha-olefinen, silangepfropften Metallocen-katalytisch hergestellten Polyolefinen (vgl. EP 1 508 579 A1) oder isocyanat-terminierten Polyurethanen zum Einsatz. Bei den reaktiven Schmelzklebstoffen führt die nachfolgende Vernetzung mit Feuchtigkeit zu temperatur- bzw. hitzebeständigen Verklebungen. Reaktive Schmelzklebstoffe kombinieren somit die Vorteile der schnellen Anfangsfestigkeit durch den physikalischen Abbindevorgang des Abkühlens mit einer nachfolgend stattfindenden chemischen Vernetzung. Bei der Verarbeitung feuchtigkeitsreaktiver Schmelzklebstoffe muss die Schmelze vor ihrer Applikation vor Feuchtigkeit geschützt werden.

Polymere für im Rahmen der vorliegenden Erfindung geeignete, reaktive feuchtigkeitsvernetzende Schmelzklebstoffe sind beispielsweise die im Handel unter der Produktbezeichnung "Vestoplast® 206" von der Degussa AG, Marl, Deutschland, erhältlichen silanmodifizierten Poly-alpha-olefine. Erfindungsgemäß besonders bevorzugt sind silanmodifizierte Poly-alpha-olefine mit zahlenmittleren Molekulargewichten Mn von 5.000 bis 25.000 g/mol, vorzugsweise von 10.000 bis 20.000 g/mol.

Wie nachfolgend noch im Detail beschrieben, können zur Steuerung der offenen Zeit und/oder der Adhäsionseigenschaften reaktiven Schmelzklebstoffen Additive auf Basis nichtreaktiver Polymere, Harze und/oder Wachse zugesetzt sein, so z. B. gegebenenfalls hydrierte Kolophoniumharzester und aliphatische Kohlenwasserstoffharze.

Der Auftrag des Klebstoffs auf die Oberfläche der Folie und/oder das Bauteil, vorzugsweise ausschließlich auf der Oberfläche der Folie, erfolgt, wie zuvor beschrieben, in Temperaturbereichen von 90 °C oder mehr bis 220 °C oder weniger, vorzugsweise von 120 °C oder mehr bis 190 °C oder weniger.

Um eine gute Auftragbarkeit des Schmelzklebstoffs zu erreichen, werden solche Schmelzklebstoffe verwendet, welche bei den Verarbeitungstemperaturen von 90 °C bis 200 °C, Brookfield-Viskositäten im Bereich von von 50 bis 1.000.000 mPa·s aufweisen.

Beispielsweise können in erfindungsgemäß bevorzugter Weise reaktive Schmelzklebstoffe auf Basis von silangepfropften Polyolefinen, insbesondere silangepfropften Poly-alpha-olefinen, eingesetzt werden, welche bei 180 °C Brookfield-Viskositäten im Bereich von 50 bis 50.000 mPa·s, insbesondere von 1.000 bis 10.000 mPa·s, vorzugsweise von 5.000 bis 8.000 mPa·s, besonders bevorzugt von 5.500 bis 7.500 mPa·s, aufweisen.

Zur Steuerung der Reaktivität und des Vernetzungsverhaltens können den reaktiven Schmelzklebstoffen üblicherweise die für diese Zwecke an sich gängigen Katalysatoren zugesetzt sein, so z. B. Dibutylzinndilaurat (DBTL), und dies in den für diese Zwecke an sich üblichen Mengen. Beispiele für erfindungsgemäß geeignete Katalysatoren sind die in der Klebstoffchemie gängigen und bekannten Katalysatoren, wie beispielsweise organische Zinnverbindungen, wie das zuvor genannte Dibutylzinndilaurat (DBTL) oder aber Alkylmercaptidverbindungen des Dibutylzinns, oder aber organische Eisen-, Blei-, Cobalt-, Wismut-, Antimon- und Zinkverbindungen sowie Mischungen der zuvor genannten Verbindungen oder Katalysatoren auf Aminbasis, wie tertiäre Amine, 1,4-Diazabicyclo[2.2.2]octan und Dimorpholinodiethylether sowie deren Mischungen. Erfindungsgemäß besonders bevorzugt ist Dibutylzinndilaurat (DBTL), insbesondere in Kombination mit Klebstoffen auf Basis der vorgenannten reaktiven, vorzugsweise silanmodifizierten Poly-alpha-olefine. Die eingesetzten Mengen an Katalysator(en) können in weiten Bereichen variieren; insbesondere beträgt die eingesetzte Katalysatormenge von 0,01 bis 5 Gew.-%, bezogen auf das Gewicht des Klebstoffs. Zur Steuerung der Anwendungseigenschaften der Klebstoffe können diesen außerdem weitere Additive zugesetzt sein, wie beispielsweise Weichmacher, hochsiedende organische Öle oder Ester oder andere der Plastifizierung dienende Additive, Stabilisatoren, Antioxidantien, Säurefänger, Füllstoffe, Alterungsschutzmittel und dergleichen.

Zur Steuerung der offenen Zeit und/oder der Adhäsionseigenschaften der zuvor genannten Klebstoffe, insbesondere auch im Hinblick auf eine verbesserte Handhabbarkeit, können den vorgenannten Schmelzklebstoffen außerdem weitere Additive auf Basis nicht-reaktiver Polymere, Harze und/oder Wachse zugesetzt sein. Auf diese Weise lassen sich die Klebstoffeigenschaften anwendungsbezogen einstellen und sozusagen maßschneidern.

Was die nichtreaktiven Polymere anbelangt, so können diese beispielsweise ausgewählt sein aus der Gruppe von (i) Ethylenvinylacetat-Copolymeren oder -Terpolymeren, insbesondere solchen mit Vinylacetat-Gehalten von 12 bis 40 Gew.-%, insbesondere von 18 bis 28 Gew.-%, und/oder mit Schmelzindizes (MFIs, DIN 53735) von 8 bis 800, insbesondere von 150 bis 500; (ii) Polyolefinen, wie unmodifizierten amorphen Poly-alpha-olefinen, insbesondere mit zahlenmittleren Molekulargewichten Mn von 5.000 bis 25.000 g/mol, vorzugsweise von 10.000 bis 20.000 g/mol, und/oder mit Erweichungsbereichen nach Ring und Kugel von 80 °C bis 170 °C, vorzugsweise von 80 °C bis 130 °C, oder unmodifizierten Metallocen-katalytisch hergestellten Polyolefinen (vgl. DE 103 23 617 A1); und (iii) (Meth-)acrylaten wie Styrol(meth)acrylaten sowie Mischungen dieser Verbindungen.

Was die nichtreaktiven Harze anbelangt, so können diese insbesondere ausgewählt sein aus der Gruppe von Kohlenwasserstoffharzen, insbesondere aliphatischen, cyclischen oder cycloaliphatischen Kohlenwasserstoffharzen, gegebenenfalls modifizierten Kolophoniumharzen (z. B. Kolophoniumharzestern), Terpen-Phenolharzen, Cumaron-Indenharzen, Methylstyrol-Harzen, polymerisierten Tallharzestern und/oder Ketonaldehydharzen.

Was die nichtreaktiven Wachse anbelangt, so können beispielsweise Polyolefinwachse, wie Polyethylen- und Polypropylenwachse, oder auf dieser Basis modifizierte Wachse eingesetzt werden.

In einer besonders bevorzugten Ausführungsform der vorliegenden Erfindung sind die Bauteile Innenausstattungskomponenten von Fahrzeugen. Solche Komponenten bestehen insbesondere aus Materialien auf der Basis von naturfaserverstärkten Polymerwerkstoffen, beispielsweise ein Naturfaser-, beispielsweise ein Flachs-Polypropylen-Material, Naturfaser-, beispielsweise ein (Flachs)-PUR oder ein Naturfaser-, beispielsweise (Flachs)-EpoxidharzMaterial, sowie auch ein im Spritzguss-Verfahren hergestellter Träger aus Polypropylen (PP), Acrylnitril-Butadienstyrol Copolymer (ABS), Styrol-Isopren-Styrol-Copolymer (SIS), Polycarbonat-ABS (PCABS), Polycarbonat (PC), thermoplastischem Polyurethan (TPU), thermoplastischem Polyolefin (TPO) oder Polyamid umfasst. Diese Materialien sind im Automobilbau weit verbreitet und daher dem Fachmann bestens bekannt.

Bevorzugt besteht das Bauteil daher aus einem Material, das ausgewählt ist aus Materialien auf der Basis von naturfaserverstärkten Polymerwerkstoffen, beispielsweise ein Naturfaser-, beispielsweise ein Flachs-Polypropylen-Material, Naturfaser-, beispielsweise ein (Flachs)-PUR oder ein Naturfaser-, beispielsweise (Flachs)-Epoxidharz-Material, sowie auch ein im Spritzguss-Verfahren hergestellter Träger aus Polypropylen (PP), Acrylnitril-Butadienstyrol Copolymer (ABS), Styrol-Isopren-Styrol-Copolymer (SIS), Polycarbonat-ABS (PCABS), Polycarbonat (PC), thermoplastischem Polyurethan (TPU), thermoplastischem Polyolefin (TPO) oder Polyamid.

Besonders bevorzugt sind Materialien aus Kunststoff-Spritzguss, aus Acrylnitril-Butadienstyrol Copolymer (ABS), Polycarbonat-ABS (PCABS), Polypropylen (PP), Polycarbonat (PC), thermoplastischem Polyolefin (TPO), Faserverbundwerkstoffe umfassend Naturfaser-PP, Glasfasern, Karbonfasern, Kunststofffasern, mineralischen Füllstoffen, Bindemittel- PP, Polyurethan, Phenolharz oder Kombinationen derselben.

Die Bauteile können eine Narbung aufweisen. Bevorzugt sind jedoch Bauteile ohne oder für den Abtransport von Luft ungeeignete Narbung (dies ist beispielsweise der Fall bei einer zu flachen Narbung).

Weiterhin sind die Bauteile vorzugsweise formstabil und/oder luftundurchlässig bzw. nur begrenzt luftdurchlässig bzw. vakuumdurchlässig.

Die Kaschierfolie kann eine Kunststofffolie sein, vorzugsweise eine Kunststofffolie auf Basis von Polyvinylchlorid (PVC), Polyolefinen, thermoplastischen Polyolefinen (TPO), Polycarbonat, Polyether, Polyestern, Polyurethanen, Poly(meth)acrylat, oder Kombinationen Co- und Terpolymeren derselben. Aber auch andere (Dekor-)Materialen sind geeignet wie zum Beispiel Schaumfolien, Textilien, Metallfolien, Echtleder, Kunstleder und Schichtverbundstoffe aus verschiedenen der oben genannten Materialien. Die Luftundurchlässigkeit kann hierbei durch den Einsatz von zusätzlichen Membranen erreicht werden.

Die Kaschierfolie weist bevorzugt eine Dicke im Bereich von 0,1 mm oder mehr bis 7,0 mm oder weniger, vorzugsweise von 1,0 mm oder mehr bis 3,5 mm oder weniger, noch bevorzugter von 1,5 mm oder mehr bis 2,5 mm oder weniger auf.

Die Kunststofffolien umfassen insbesondere Folien auf Basis von Polyolefinen wie Polyethylen und Polypropylen. Weiterhin sind Folien auf Basis von Polyester, Polyamid, Polycarbonat, Polyvinylchlorid, Polymethylmethacrylat und Polystyrol bevorzugt. Unter Polyolefinen wie Polyethylen und Polypropylen werden hier nicht nur die betreffenden Ethylen- und Propylenhomopolymere, sondern auch Copolymere mit anderen Olefinen wie beispielsweise Acrylsäure oder 1-Olefinen verstanden. So sind unter Polyethylen insbesondere Ethylencopolymere mit 0,1 bis unter 50 Gew.-% eines oder mehrerer 1-Olefine wie Propylen, 1-Buten, 1-Penten, 1-Hexen, 1-Octen, 1-Decen oder 1-Dodecen zu verstehen, wobei Propylen, 1-Buten und 1-Hexen bevorzugt sind. Unter Polypropylen sind insbesondere auch Propylencopolymere mit 0,1 bis unter 50 Gew.-% Ethylen und/oder eines oder mehrerer 1-Olefine wie 1-Buten, 1-Penten, 1-Hexen, 1-Octen, 1-Decen oder 1-Dodecen zu verstehen, wobei Ethylen, 1-Buten und 1-Hexen bevorzugt sind. Unter Polypropylen ist dabei bevorzugt im Wesentlichen isotaktisches Polypropylen zu verstehen.

Folien aus Polyethylen können aus HDPE oder LDPE oder LLDPE hergestellt werden.

Unter Folien aus Polyamid sind solche bevorzugt, die sich von Nylon 6 ableiten.

Unter Folien aus Polyester sind solche aus Polybutylenterephthalat und insbesondere aus Polyethylenterephthalat (PET) bevorzugt.

Unter Folien aus Polycarbonaten sind solche bevorzugt, die sich von Polycarbonaten ableiten, die unter Verwendung von Bisphenol A hergestellt sind.

Unter Folien aus Polyvinylchlorid sind solche aus Hart-Polyvinylchlorid oder Weich-Polyvinylchlorid zu verstehen, wobei Weich-Polyvinylchlorid auch Copolymere des Vinylchlorids mit Vinylacetat und/oder Acrylaten umfasst.

Kunststofffolien im Sinne der vorliegenden Erfindung können auch Verbundfolien umfassen, beispielsweise Folien, die eine der vorstehend genannten Folien und eine Metallfolie oder Faserfolien umfassen.

Im Rahmen der vorliegenden Erfindung wurden verschiedene Kaschierversuche auf glatten, ungenarbten Bauteilen mit einer im Automobilbereich üblicherweise eingesetzten TPO-Schaumfolie durchgeführt, wobei unterschiedliche Bauteilgeometrien, Klebstoffgravuren (auf der TPO-Folie), Kaschierparameter und eine unterschiedliche Anzahl und Art von Bohrungen sowie Bohrungspositionen im Bauteil getestet wurden. Das Bauteilmaterial und der Klebstoff waren so ausgewählt, dass der Klebstoff nur begrenzte Adhäsion zu den Bauteilen aufbaut um ein Abziehen der kaschierten Folie und eine genaue Begutachtung der Klebfuge zu ermöglichen. Die Analyse der erfindungsgemäß kaschierten Bauteile zeigte eine perfekte Verklebung ohne Lufteinschlüsse.

Tatsächlich sind die durch den Gravurauftrag angelegten Kanäle auch im kaschierten Formteil noch erkennbar. Dadurch wird, zum Beispiel, die bei mit Luftfeuchtigkeit vernetzenden reaktiven Klebstoffen gefürchtete, unvollständige oder verlangsamte Vernetzung des Klebstoffs in Bereichen ohne Luftkontakt vermieden.

Die Abbildung 2 zeigt ein Beispiel einer Klebstoffstruktur nach dem Ablösen der Folie vom Bauteil. Die hell glänzenden Kanäle, die ein gleichmäßiges Entfernen der zwischen dem Bauteil und der Folie befindlichen Luft ermöglicht haben, sind vollständig erhalten.

Anhand von Bauteilen mit ausgewählter Geometrie und Lochpositionierung zeigte sich, dass ein ausreichender Lufttransport innerhalb des Klebstoffrasters über Entfernungen von mehr als 10 cm vom nächsten Loch, und auch über kritische Bereiche, wie Kanten und Radien, hinweg gewährleistet ist.

Weiterhin hat sich herausgestellt, dass eine weitaus geringere Anzahl an Vakuumlöchern notwendig ist, als dies in der aktuellen Praxis erforderlich ist. Besonders bewährt haben sich dabei längliche Lochformen (z.B. Langlöcher), deren Länge die des Gravurrasters überschreitet. Damit ist sichergestellt, dass ein Loch nicht von einem einzelnen Klebstoffpunkt verschlossen werden kann und immer ein Kontakt zwischen einem Loch und dem Kanalsystem im Klebstoffraster besteht.

Vergleichsversuche mit einem klassischen glatten (d.h. nicht rasterförmigen) Walzenauftrag mit gleicher Klebstoffmenge zeigen auf ungenarbten Oberflächen keinerlei horizontalen Lufttransport. Lediglich in Bereichen, in denen die Folie aufgrund der Bauteilgeometrie und Dynamik des Kaschierprozesses praktisch auf das Bauteil "abgerollt" wird, sind keine Lufteinschlüsse erkennbar. Insbesondere zeigen alle Flächen, auch bei einer Vielzahl von Löchern, bei etwa 20 bis 80 % der Fläche auf Lufteinschlüsse zurückzuführende fehlende Benetzung und Verklebung. Auch Vergleichsversuche ohne Klebstoff zeigen praktisch keinen horizontalen Lufttransport. Die weiche Folie dichtet unmittelbar auf dem glatten Substrat ab.

### Beispiele

Alle Parameterbestimmungen und Messungen wurden, soweit nicht anders angegeben, unter den für den Fachmann üblichen Standardbedingungen durchgeführt, d.h. bei Raumtemperatur (21 °C +/- 1°C) und unter Atmosphärendruck (1 atm).

In den nachfolgenden Versuchen wurde ein nicht-reaktiver polyolefinbasierter Schmelzklebstoff der Jowat AG, Deutschland (Jowat-Toptherm® 238.30) verwendet.

Dieser wurde auf die Unterseite einer TPO Folie (Benecke-Kaliko/Deutschland, 2 mm Schaum mit 0,8 mm Deckschicht) mit Hilfe einer Gravurwalze der Firma Hardo (Deutschland) durch Walzenauftrag aufgetragen.

Ein tellerähnliches Bauteil (240 mm Durchmesser, 50 mm Tiefe) aus Polyoxymethylen (POM) ohne Narbung, mit Vakuumlöchern im Abstand von ca. 2 cm im äußeren Randbereich wurde mit der beschichteten Folie an einer Einzelplatz-Vakuumkaschieranlage der Firma Kiefel (Deutschland) kaschiert, wobei die Unterseite der Folie auf 180 °C, die Oberseite auf 140 °C erhitzt wurde und die Folie in Längs- und Querrichtung um 5% verstreckt wurde. Anschließend wurde das kaschierte Bauteil auf Fehlstellen aufgrund von Lufteinschlüssen sowie auf die Größe der kaschierten Fläche (zur Einschätzung der Reichweite des Lufttransportes durch die Kanäle der Gravur) begutachtet.

Die Ergebnisse sind in folgender Tabelle wiedergegeben:

**Tabelle**

| **Nr.** | **Klebstoffauftrag** | **Gravurraster** | **Gravurtiefe** | **Anzahl Vakuumlöcher** | **Ergebnis der Kaschierung** |
|---|---|---|---|---|---|
| 1 | 70 g/m² | 2,5 mm | 0,64 mm | 35 Löcher (Durchmesser 0.5 mm) | Sehr gut: keine Fehlstellen, sehr großer Kaschierbereich |
| 2 | 40 g/m² | 1,0 mm | 0,55 mm | 35 Löcher (Durchmesser 0.5 mm) | Gut: keine Fehlstellen, großer Kaschierbereich |
| 3 | 70 g/m² | Glatt | glatt | 35 Löcher (Durchmesser 0.5 mm) | Ungenügend: sehr viele Fehlstellen, sehr kleiner Kaschierbereich |
| 4 | 40 g/m² | Glatt | glatt | 35 Löcher (Durchmesser 0.5 mm) | Ungenügend: sehr viele Fehlstellen, sehr kleiner Kaschierbereich |
| 5 | 70 g/m² | 2,5 mm | 0,64 mm | 4 Löcher (Durchmesser 0.5 mm) | Befriedigend: keine Fehlstellen, mittelgroßer Kaschierbereich |
| 6 | 70 g/m² | 2,5 mm | 0,64 mm | 4 Langlöcher (0.5 mm x 5 mm) | Sehr gut: keine Fehlstellen, großer Kaschierbereich |
| 7 | 70 g/m² | 2,5 mm | 0,64 mm | ohne Löcher | Ungenügend: Kaschierung nicht möglich, Vakuumzugang ungenügend |

## Patentansprüche

1. Verfahren zur Herstellung eines kaschierten Formteils aus einem Bauteil und einer Kaschierfolie umfassend
- das Auftragen eines Klebstoffs auf die Oberfläche der Kaschierfolie und/oder des Bauteils,
- das Zusammenfügen des Bauteils und der Kaschierfolie so, dass die Schicht des rasterförmig aufgetragenen Klebstoffs zwischen der Kaschierfolie und dem Bauteil angeordnet ist, und
- das Verbinden der Kaschierfolie mit dem Bauteil durch Abziehen der zwischen Bauteil und Folie befindlichen Luft über die Kanäle durch Anlegen eines Unterdrucks, wobei das Verfahren **dadurch gekennzeichnet ist, dass**
- das Auftragen eines Klebstoffs auf die Oberfläche der Kaschierfolie und/oder des Bauteils rasterförmig erfolgt und durch das rasterförmige Auftragen des Klebstoffs auf der Oberfläche Kanäle ausgebildet werden, und
- der Klebstoff ein Schmelzklebstoff ist, der bei einer Verarbeitungstemperatur von 90 °C bis 200 °C eine Brookfield-Viskosität von 50 bis 1 000 000 mPa·s aufweist.

2. Verfahren gemäß Anspruch 1, **dadurch gekennzeichnet, dass** das Verbinden der Kaschierfolie mit dem Bauteil durch Abziehen der zwischen Bauteil und Folie befindlichen Luft über die Kanäle durch Anlegen eines Unterdrucks in Kombination mit einem Herauspressen der zwischen Bauteil und Folie befindlichen Luft über die Kanäle durch Anlegen eines Pressdrucks erfolgt.

3. Verfahren gemäß Anspruch 1 oder 2, **dadurch gekennzeichnet, dass** der Klebstoff punktförmig oder streifenförmig aufgetragen wird, vorzugsweise in Form von pyramidenstumpfförmigen, mehreckigen, rautenförmigen, rechteckigen, ovalen, L-förmigen, runden oder unregelmäßig geformten Klebstoffauftragungen, besonders bevorzugt in Form von pyramidenstumpfförmigen Klebstoffauftragungen.

4. Verfahren gemäß einem der Ansprüche 1, 2 oder 3, **dadurch gekennzeichnet, dass** die Klebstoffauftragungen in einem Abstand von 0,1 mm oder mehr bis 10,0 mm oder weniger, vorzugsweise von 0,3 mm oder mehr bis 5,0 mm oder weniger, besonders bevorzugt von 0,5 mm oder mehr bis 4,0 mm oder weniger, ganz besonders bevorzugt von 1,0 mm oder mehr bis 3,5 mm oder weniger, insbesondere von 1,5 mm oder mehr bis 2,5 mm oder weniger angeordnet werden.

5. Verfahren gemäß einem oder mehreren der Ansprüche 1 bis 4, **dadurch gekennzeichnet, dass** der Klebstoff ausgewählt ist aus der Gruppe bestehend aus reaktiven oder nicht-reaktiven thermoplastischen Schmelzklebern, bevorzugt Schmelzkleber auf Basis von Ethylenvinylacetaten, Copolyamiden, Copolyestern, Copolyethern, Polyolefinen, Polyurethanen, oder entsprechenden Co- und/oder Terpolymeren.

6. Verfahren gemäß einem oder mehreren der Ansprüche 1 bis 5, **dadurch gekennzeichnet, dass** die Kaschierfolie eine Kunststofffolie ist, vorzugsweise eine Kunststofffolie auf Basis von Polyvinylchlorid (PVC), Polyolefinen, thermoplastischen Polyolefinen (TPO), Polycarbonat, Polyether, Polyestern, Polyurethanen, Poly(meth)acrylat, oder Kombinationen, Co- oder Terpolymeren derselben.

7. Verfahren gemäß einem oder mehreren der Ansprüche 1 bis 6, **dadurch gekennzeichnet, dass** die Kaschierfolie eine Dicke im Bereich von 0,1 mm oder mehr bis 7,0 mm oder weniger, vorzugsweise von 1,0 mm oder mehr bis 3,5 mm oder weniger, noch bevorzugter von 1,5 mm oder mehr bis 2,5 mm oder weniger aufweist.

8. Verfahren gemäß einem oder mehreren der Ansprüche 1 bis 7, **dadurch gekennzeichnet, dass** das Bauteil aus einem luftundurchlässigen oder begrenzt luftdurchlässigen Material besteht.

9. Verfahren gemäß einem oder mehreren der Ansprüche 1 bis 8, **dadurch gekennzeichnet, dass** das Bauteil aus einem Material besteht, das ausgewählt ist aus Kunststoff-Spritzguss aus Acrylnitril-Butadienstyrol Copolymer (ABS), Polycarbonat-ABS (PCABS), Polypropylen (PP), Polycarbonat (PC), thermoplastischem Polyolefin (TPO), Faserverbundwerkstoffe umfassend Naturfaser-PP, Glasfasern, Carbonfasern, Kunststofffasern, mineralischen Füllstoffen, Bindemittel-PP, Polyurethan, Phenolharz oder Kombinationen derselben.

10. Verfahren gemäß einem oder mehreren der Ansprüche 1 bis 9, **dadurch gekennzeichnet, dass** das Bauteil keine Kaschiernarbung aufweist.

11. Verfahren gemäß einem oder mehreren der Ansprüche 1 bis 10, **dadurch gekennzeichnet, dass** die mit Klebstoff beschichtete Kaschierfolie vor und/oder während des Verbindens mit dem Bauteil erhitzt wird.

12. Verfahren gemäß einem oder mehreren der Ansprüche 1 bis 11, **dadurch gekennzeichnet, dass** die Kaschierung eine Vakuumkaschierung umfasst.

## Claims

1. A process for preparing a laminated molded part from a component and a laminating sheet, comprising:
- applying an adhesive to the surface of the laminating sheet and/or of the component;
- joining the component and the laminating sheet in such a way that the layer of the adhesive applied in a grid-like manner is arranged between the laminating sheet and the component; and
- bonding the laminating sheet with the component by extracting the air present between the component and the sheet through the channels by applying a reduced pressure, wherein said process is **characterized in that**
- the applying of an adhesive to the surface of the laminating sheet and/or of the component is effected in a grid-like manner, and channels are formed on the surface from the grid-like application of the adhesive; and
- said adhesive is a hot-melt adhesive that has a Brookfield viscosity of from 50 to 1,000,000 mPa·s at a processing temperature of from 90 °C to 200 °C.

2. The process according to claim 1, **characterized in that** the bonding of the laminating sheet with the component is conducted by extracting the air present between the component and the sheet through the channels by applying a reduced pressure in combination with pressing the air present between the component and the sheet out through the channels by applying a pressing force.

3. The process according to claim 1 or 2, **characterized in that** the adhesive is applied in dots or stripes, preferably in the form of truncated-pyramid-shaped, polygonal, diamond-shaped, rectangular, oval, L-shaped, round or irregularly shaped adhesive deposits, more preferably in the form of truncated-pyramid-shaped adhesive deposits.

4. The process according to any of claims 1, 2 or 3, **characterized in that** said adhesive deposits are provided at intervals of from 0.1 mm or more to 10.0 mm or less, preferably from 0.3 mm or more to 5.0 mm or less, more preferably from 0.5 mm or more to 4.0 mm or less, even more preferably from 1.0 mm or more to 3.5 mm or less, especially from 1.5 mm or more to 2.5 mm or less.

5. The process according to one or more of claims 1 to 4, **characterized in that** said adhesive is selected from the group consisting of reactive or nonreactive thermoplastic hot-melt adhesives, preferably a hot-melt adhesive based on ethylene vinyl acetates, copolyamides, copolyesters, copolyethers, polyolefins, polyurethanes, or corresponding co- and/or terpolymers.

6. The process according to one or more of claims 1 to 5, **characterized in that** said laminating sheet is a plastic sheet, preferably a plastic sheet based on polyvinyl chloride (PVC), polyolefins, thermoplastic polyolefins (TPO), polycarbonate, polyether, polyesters, polyurethanes, poly(meth)acrylate, or combinations, co- or terpolymers thereof.

7. The process according to one or more of claims 1 to 6, **characterized in that** said laminating sheet has a thickness within a range of from 0.1 mm or more and 7.0 mm or less, preferably from 1.0 mm or more and 3.5 mm or less, more preferably from 1.5 mm or more and 2.5 mm or less.

8. The process according to one or more of claims 1 to 7, **characterized in that** said component is made of an air-impermeable or partially air-permeable material.

9. The process according to one or more of claims 1 to 8, **characterized in that** said component is made of a material selected from injection-molded plastics of acrylonitrile-butadiene-styrene (ABS) copolymer, polycarbonate ABS (PCABS), polypropylene (PP), polycarbonate (PC), thermoplastic polyolefin (TPO), fiber composites including natural fiber PP, glass fibers, carbon fibers, plastic fibers, mineral fillers, binder PP, polyurethane, phenolic resin, or combinations thereof.

10. The process according to one or more of claims 1 to 9, **characterized in that** said component has no lamination grain.

11. The process according to one or more of claims 1 to 10, **characterized in that** the laminating sheet coated with adhesive is heated before and/or during the bonding with the component.

12. The process according to one or more of claims 1 to 11, **characterized in that** said lamination includes vacuum lamination.

## Revendications

1. Procédé de fabrication d'une pièce moulée contrecollée à partir d'une pièce moulée et d'une feuille de contrecollage, comprenant les étapes suivantes :
- application d'un adhésif sur la surface de la feuille de contrecollage et/ou du composant,
- assemblage du composant et de la feuille de contrecollage de façon telle que la couche d'adhésif appliqué à la manière d'une grille soit disposée entre la feuille de contrecollage et le composant, et
- liaison de la feuille de contrecollage avec le composant par aspiration de l'air présent entre le composant et la feuille par l'intermédiaire de canaux par application d'une dépression, le procédé étant **caractérisé en ce que**
- l'application d'un adhésif sur la surface de la feuille de contrecollage et/ou du composant s'effectue à la manière d'une grille et **en ce que** l'application de l'adhésif sous forme de grille permet la formation de canaux sur la surface, et
- l'adhésif est un adhésif thermofusible qui présente une viscosité Brookfield de 50 à 1 000 000 mPa.s à une température de traitement de 90°C à 200°C.

2. Procédé selon la revendication 1, **caractérisé en ce que** la liaison de la feuille de contrecollage avec le composant par aspiration de l'air présent entre le composant et la feuille par l'intermédiaire des canaux par application d'une dépression s'effectue en combinaison avec une expulsion de l'air présent entre le composant et la feuille par l'intermédiaire des canaux par application d'une pression de compression.

3. Procédé selon la revendication 1 ou 2, **caractérisé en ce que** l'adhésif est appliqué sous forme de points ou de bandes, de préférence par des applications d'adhésif sous forme de pyramides tronquées, polygonales, losanges, rectangulaires, ovales, en forme de L, rondes ou de formes irrégulières, de manière particulièrement préférée par des applications d'adhésif sous forme de pyramides tronquées.

4. Procédé selon l'une des revendications 1, 2 ou 3, **caractérisé en ce que** les applications d'adhésif sont disposées à une distance comprise entre 0,1 mm ou plus et 10,0 mm ou moins, de préférence entre 0,3 mm ou plus et 5,0 mm ou moins, de manière particulièrement préférée entre 0,5 mm ou plus et 4,0 mm ou moins, de manière tout particulièrement préférée entre 1,0 mm ou plus et 3,5 mm ou moins, en particulier entre 1,5 mm ou plus et 2,5 mm ou moins.

5. Procédé selon l'une ou plusieurs des revendications 1 à 4, **caractérisé en ce que** l'adhésif est choisi dans le groupe comprenant des colles thermofusibles thermoplastiques réactives ou non réactives, de préférence des colles thermofusibles à base d'éthylène-acétate de vinyle, copolyamides, copolyesters, copolyéthers, polyoléfines, polyuréthanes, ou co- et/ou terpolymères correspondants.

6. Procédé selon l'une ou plusieurs des revendications 1 à 5, **caractérisé en ce que** la feuille de contrecollage est une feuille en matière plastique, de préférence une feuille en matière plastique à base de chlorure de polyvinyle (PVC), polyoléfines, polyoléfines thermoplastiques (TPO), polycarbonate, polyéther, polyesters, polyuréthanes, poly(méth)acrylate, ou leurs combinaisons, co- ou terpolymères.

7. Procédé selon l'une ou plusieurs des revendications 1 à 6, **caractérisé en ce que** la feuille de contrecollage a une épaisseur comprise entre 0,1 mm ou plus et 7,0 mm ou moins, de préférence entre 1,0 mm ou plus et 3,5 mm ou moins, plus préférablement entre 1,5 mm ou plus et 2,5 mm ou moins.

8. Procédé selon l'une ou plusieurs des revendications 1 à 7, **caractérisé en ce que** le composant consiste en un matériau étanche à l'air ou perméable à l'air de façon limitée.

9. Procédé selon l'une ou plusieurs des revendications 1 à 8, **caractérisé en ce que** le composant consiste en un matériau choisi dans le groupe comprenant : matériau moulé par injection de matière plastique, copolymère acrylonitrile-butadiène-styrène (ABS), polycarbonate-ABS (PCABS), polypropylène (PP), polycarbonate (PC), polyoléfine thermoplastique (TPO), matériaux composites fibreux comprenant PP fibres naturelles, fibres de verre, fibres de carbone, fibres synthétiques, charges minérales, liants PP, polyuréthane, résine phénolique ou leurs combinaisons.

10. Procédé selon l'une ou plusieurs des revendications 1 à 9, **caractérisé en ce que** le composant est dépourvu de grainage de contrecollage.

11. Procédé selon l'une ou plusieurs des revendications 1 à 10, **caractérisé en ce que** la feuille de contrecollage revêtue d'adhésif est réchauffée avant et/ou pendant la liaison avec le composant.

12. Procédé selon l'une ou plusieurs des revendications 1 à 11, **caractérisé en ce que** le contrecollage comprend un contrecollage sous vide.
